Europäisches Patentamt

(19) European Patent Office

Office européen des brevets

(11) EP 0 959 582 A1

## (12) EUROPEAN PATENT APPLICATION

(43) Date of publication:
24.11.1999 Bulletin 1999/47

(51) Int. Cl.⁶: $H04L\ 1/12$, $H04L\ 12/56$, $H04Q\ 11/04$

(21) Application number: 98810469.1

(22) Date of filing: 20.05.1998

(84) Designated Contracting States:
AT BE CH CY DE DK ES FI FR GB GR IE IT LI LU MC NL PT SE
Designated Extension States:
AL LT LV MK RO SI

(71) Applicant: ASCOM TECH AG
3018 Bern (CH)

(72) Inventors:
• Kühnel, Thomas, Dr.
3011 Bern (CH)

• Martignoni, Stéphane
1201 Genève (CH)
• Wu, Yung-Shain, Dr.
2557 Studen (CH)

(74) Representative:
Roshardt, Werner Alfred, Dipl.-Phys.
Keller & Partner
Patentanwälte AG
Zeughausgasse 5
Postfach
3000 Bern 7 (CH)

(54) **Process and architecture for controlling traffic on a digital communication link**

(57) A control mechanism for controlling the traffic over a digital communication link with variable link capacity, BER etc. is provided. The transmission capacity of a link is continuously monitored and a prediction of the available link capacity is made for at least one time unit in advance. According to a preferred embodiment, the prediction utilizes an adaptive linear predictor mechanism to forecast the future link capacity. Transmission and QoS parameters of existing connections are modified to match the predicted link capacity. New connections are admitted based on the predicted available link capacity.

EP 0 959 582 A1

## Description

### Technical field

The invention relates to a process and an architecture for controlling the traffic on a digital communication link of variable transmission quality, established between two network elements.

### Prior art

In the recent years two trends are affecting telecommunication technology: mobile communication and broadband communication.

Mobile communication via wireless links has gained significant importance for voice and data transmission. Wireless systems in general have to cope with high Bit Error Rates (BER) up to $10^{-2}$ on the wireless link. In addition, the transmission quality can strongly vary in time.

Broadband communication is enabling a whole range of new multimedia services. These services ask for a specific network infrastructure with regard to bandwidth (capacity in bit/s), timing (delay, jitter) and error rates. These requirements are referred to as Quality of Service (QoS) parameters. Once a connection between a service user and a service provider has been established throughout the network, a traffic contract defining a certain QoS between service user, service provider, and the network is agreed on.

ATM (Asynchronous Transfer Mode) is considered to be the major technology for future development of the Broadband Integrated Services Digital Networks (B-ISDN) which are able to handle different kinds of telecommunications traffic, including video, data and audio. ATM allows the efficient use of the available bandwidth of a given transmission channel due to statistical multiplexing of fixed size ATM cells. An ATM cell includes a header field (5 octets) and a payload field containing 48 octets. The ATM cell header contains the Virtual Path Identifiers (VPI) and Virtual Channel Identifiers (VCI) which are used for addressing between network elements (i.e. for routing the ATM cell to an intended destination). Typical network elements are ATM switches, multiplexer and cross connects.

In general, communication in ATM networks is connection oriented, i.e. prior to the data transmission, the data path between service user and service provider throughout the network is set up. All ATM cells belonging to a given connection, which is identified by the same VCI and VPI values in their header, travel along the pre-established path. During connection setup a traffic contract defining a certain QoS for the connection is agreed on between service user, service provider and the network. Once the connection is established, the QoS according to the traffic contract has to be guaranteed by the network. The network has to provide the resources (e.g. bandwidth, switching capability) in the network elements and the links for the duration of the connection. Once the connection is released, the network resources associated with the connection are free to be allocated for new connections.

Various approaches have been proposed for integrating wireless technology and ATM. US patent 5406550 describes how VPI and VCI are favorably mapped into the radio transmission system. US patent 5600633 describes an intelligent basestation which is attached to an ATM communication network. A wireless cellular ATM system that is composed of radio cells with different sizes, i.e. spot beams cells for user data transfer and wide beams covering the entire area mainly for control data exchange between the mobile station and the basestation is part of US 5553069. The use of OAM cells to support mobility is subject of US 5633868. The architecture of a wireless ATM ad hoc-LAN with mobile basestations is explained in US 5623495. US 5590125 describes how connection trees are used to support mobility.

None of the known publications however addresses the impact of the wireless link behavior on the QoS of ATM connections.

A major problem concerning the QoS of a wireless ATM link is the change of the parameters of the air-interface in time, e.g. transmission errors can result in repeated transmissions of the distorted data which in turn leads to a higher delay and to a reduction of the available bandwidth. As a consequence, the deployed congestion control mechanisms has to be continuously adapted to the current status of the air-interface and the QoS it can support. The use of RM (Resource Management) cells to control ABR (Available Bit Rate) is a known technique in the area of ATM. It's application for flow control and resource management in wireless ATM systems is described in the paper: "Use of ABR flow control in wireless ATM systems". According to this publication, terminal and network elements form a control loop for the incoming direction of transmitted ATM cells. Since RM cells operate on the ATM layer, rate adaptation is very fast. However, the usage of ABR in ATM networks is very limited due to it's hardware dependencies at the current time. Current and evolving applications and systems are more likely to utilize UBR (Unspecified Bit Rate), CBR (Constant Bit Rate), and VBR (Variable Bit Rate) traffic types. So, in order to allow those connections to traverse a wireless ATM link, special considerations have to be taken into account. Moreover, it is seen that various schemes, including flow control using ABR, have to be combined for optimal results, i.e. maximum utilization of the scarce resource air-bandwidth by guaranteeing the QoS for established connections. The described invention shows one way on how to achieve this goal.

Changes in the transmission quality lead to changes in the transmission capacity of the link. The transmission capacity is defined as number of bits per second that can be conveyed via the link.

## Summary of the invention

It is an object of the invention to provide a control mechanism for managing traffic over a digital transmission link of variable transmission quality, which is established between two network elements. It is a further object of the invention to provide a control mechanism that is not limited to ABR traffic.

These and other objects are satisfied by the subject matter of claim 1. According to the invention, the transmission capacity of a link is continuously monitored and a prediction of the available capacity is made for a next time unit.

Channel impairments have characteristic parameters that show a typical evolution in time. This means that noise, interferences and crosstalk may be random but that the general shape (envelope) in time and in its effect on the link capacity is not necessarily random. The invention takes advantage of this fact: The impact of the evolving distortions on the transmission link capacity in the near future is calculated (on the basis of the instantaneous and past distortions). The prediction covers at least one time unit, i.e. a time interval that is at least as long as the delay of the control loop. The duration of a time unit may be several seconds or several tenths of a second. The source of the data to be transmitted is controlled via the control loop. Due to the prediction there is a timing advance to adjust the transmission rate of the source. This timing advance compensates for the delay of the control loop. It is evident that this method is able to achieve an optimal QoS for the data connections traversing the link. The ATM cell loss rate can be minimized.

This method may be used for ABR as well as for UBR (Unspecified Bit Rate), CBR (Constant Bit Rate) and VBR (Variable Bit Rate) traffic types.

The prediction may be based on the continuously measured BER (Bit Error Rate) of the link. Specific OAM (Operation and Maintenance) data for detecting the BER may be transmitted for this purpose over the link in both directions, i.e. up-link and down-link. The evaluation of data frames which had been transmitted over the wireless link is another possibility to determine the BER for one direction. The results of the measurements which are obtained at the receiving ends of the bidirectional link are passed back to the respective transmitters. This can be achieved by special OAM data which are sent in band from the receiver to the transmitter.

The past and the instantaneous buffer fill state of the transmitter, the number of connections and their respective QoS requirements are taken into account for the prediction of the available link capacity.

The type of the communication protocol determines the action to be carried out in case of incurred errors during transmission. The automatic repeat request protocol (ARQ) is a well known technique. The prediction takes the number of pending and expected retransmissions into account. The available link capacity for new data to be transmitted will be reduced due to the repeated transmission of data that were falsified during an earlier transmission attempt.

According to a preferred embodiment, the prediction of the available link capacity is based on an adaptive linear predictor mechanism. The predictor parameters get adapted in the course of time. Thus the predictor itself gets trained for different distortion patterns.

Another predictor technique may utilize a database for different distortion patterns. The identification of the distortion pattern and the anticipated evolution of the link capacity is derived from the continuous pattern matching of the stored distortion pattern and samples that reflect the current link status. Classes of patterns are formed to reduce the total number of different patterns. For performance reasons this kind of pattern matching can be implemented as table look-up operations. The reference pattern itself can be statically configured or dynamically adjusted, i.e. the reference pattern within the database are continuously updated.

It is suggested that both ends of the bidirectional link are monitored and controlled individually according to the preferred method of the invention. The entities that perform the control are on the transmitter side and may be integrated in an ATM-switch. It is also possible to insert additional entities in front of the ports of the ATM fabric. The invention is particularly suited for radio links, infrared links and the like. However, in certain cases it may be advantageous to monitor and control fixed links too (e.g. for digital communication over power lines).

The link may be used for connections having different classes of QoS. Some QoS classes define a fixed data rate whereas others allow an adaptation of the actual data rate. When the prediction anticipates a reduction of the link capacity, ABR sources can be controlled by the ATM system to reduce the data rate of emitted cells. The system may use a threshold that is below the actually available link capacity to determine whether a source must reduce the transmission rate.

Preferably the threshold is not fixed but variable and its value is determined on the basis of the current transmission quality (BER, SNR) of the link.

Because the link is continuously monitored with respect to the available capacity and transmission quality, it is possible to adapt the error correction scheme depending on the BER. Coding at the transmitting end may be done according to two or more different error correction schemes. The first error correction scheme is selected in such a way that it is adapted to heavily distorted transmission channels and the second one is selected to be adapted to only slightly distorted channels. The applied error correction scheme can be changed dynamically.

The entity for monitoring and controlling the link has preferably a database that stores all relevant parameters of the link. The ATM control plane functions and traffic management can quickly fetch all required parameters from the database for establishing and modifying connections.

The following description and the claims disclose additional combinations of features of the invention.

**Brief description of the drawings**

The accompanying drawings illustrate preferred embodiments of the invention and serve to explain the principles of the invention in combination with the detailed description.

Fig. 1 shows a schematic diagram of a possible variation of the link capacity in time;

Fig. 2 shows a block diagram of the linear predictor;

Fig. 3 shows a block diagram of the linear predictor with adjustments of coefficients;

Fig. 4 shows a general diagram of selected elements of an ATM network with a wireless link;

Fig. 5 shows the network element and its subsystems;

Fig. 6 shows a table of a possible mapping of connection parameters and error correction schemes within the wireless interface module;

Fig. 7 shows a simplified block diagram of the Link Monitor Module;

Fig. 8 shows the situation of Port Interface Module between Switch Fabric and the ATM link;

Fig. 9 shows a block diagram of the Connection Admission Control Module.

Same elements are referenced by same numerals throughout the drawings.

**Preferred embodiments**

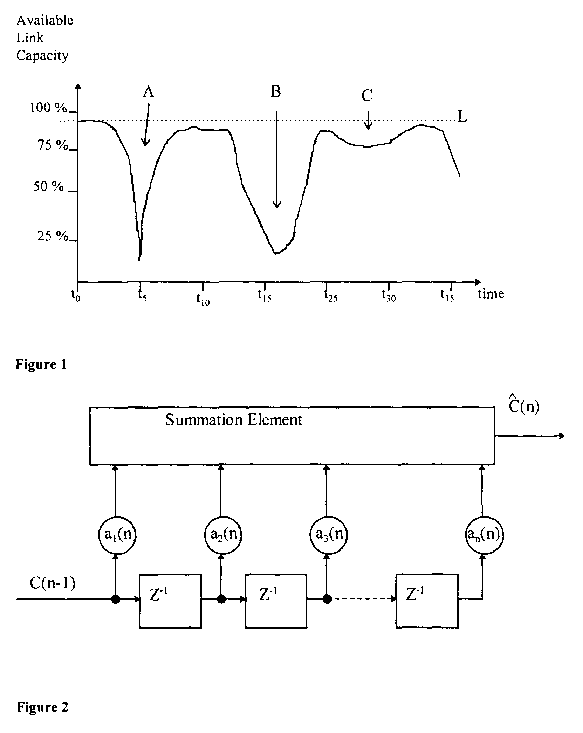

Fig. 1 exemplifies the evolution of the available data transmission capacity (relative ot the maximum link capacity) of a wireless link in the course of time. It is assumed that the data transmission capacity is usually at a certain level L. Due to external distortions (A, B, C etc.), the total transmission capacity of the link is reduced for a certain time. According to the invention the link parameters (especially the link capacity) are determined and the transmission parameters of existing and prospective connections are adjusted in order to maximize the link utilization while trying to keep the QoS for the connections at the agreed level.

In order to react on changes of the available link capacity, the system has to react in a timely manner. This is particularly true for a high link utilization, i.e. the used link capacity is close to the maximum available (total) link capacity.

The reaction time for determination of the current link parameter and the subsequent adjustment of the transmission parameter is introducing a delay which is compensated by the prediction.

To compensate the delays, a forecast of the duration and the amount of the reduction of the link capacity is made. Tests have shown that - even though most of the distortions like noise are basically random - it is possible to classify the characteristics of the distortions. The effect of distortions on the transmission is known. The knowledge of the distortions allows to compute the total available link capacity. According to Shannon's law there is direct dependency between channel capacity and the signal noise ratio (SNR). In fact, it is possible to forecast the further development of the distortions and the available link capacity on the basis of the past link capacity.

There are different algorithms to predict, at time n-1, the load of the wireless link at time n. A linear predictor can be employed for this purpose. The basic principle of the linear predictor consists in estimating the next value by a linear combination of the previous values.

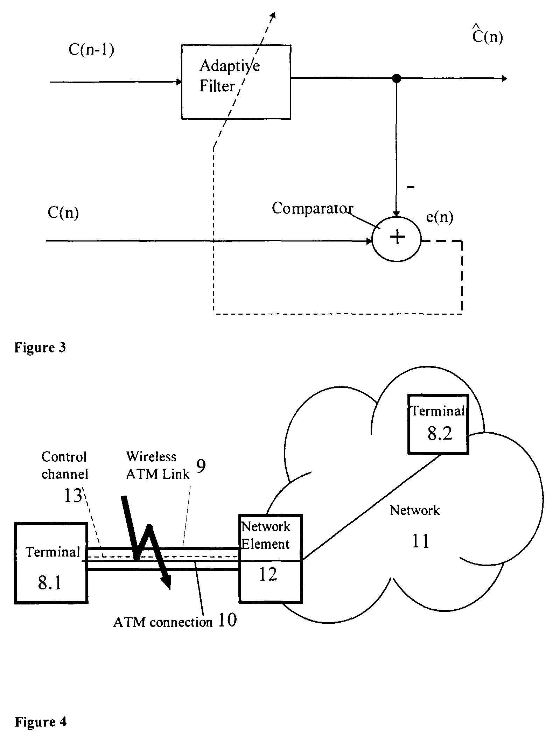

Fig. 2 shows a block diagram of a linear predictor. The delay elements $Z^{-1}$ are used to delay the input value C(n-1) for one time unit. The delayed input values are weighted with the respective coefficient $a_1(n)$ to $a_m(n)$ before they are passed into the summation element. The output of the summation element represents the estimation value $\hat{C}(n)$ for the time $t_n$. The adaptive linear predictor that is depicted in Fig 3 comprises a linear predictor and a comparator. The output of the comparator is used to adjust the coefficients of the linear predictor. The current capacity value C(n-1) is fed into the linear predictor. The output of the adaptive linear represents the estimation value of the future capacity $\hat{C}(n)$. The adaptive linear predictor is adjusted for further operation with the error value e(n) that is obtained by correlation of the nominal value of the capacity C(n) and the estimated capacity $\hat{C}(n)$. A heuristic approach is used to determine the order of the adaptive linear predictor. In this application, the estimation of the future link capacity $\hat{C}(n)$ is the linear combination of the previous capacity values C(n-k):

$$\hat{C}(n) = \sum_{k=1}^{M} a_k(n)C(n\text{-}k)$$

where M is the order of the adaptive linear predictor in direct form and $a_k$ are the predictor coefficients. The coefficient updating of the LMS (least mean square) is as follows (see e.g. B. Widrow et.al., "Adaptive Noise Canceling: Principle and Applications", Proc of the IEEE, Vol. 63, No 12, December 1975):

$$a_k(n+1) = a_k(n) + \mu e(n)C(n-k)$$

and the error e(n):

$$e(n) = C(n) - \hat{C}(n)$$

with k = 1,...,M
and $\mu$ a constant step size with $\mu < 1$

In order to speed up the tracking capacity, the following step-size can be used (see e.g. Y.S.Wu: "Fast Converging Adaptive IIR LMS Filter in direct Form Using the Suboptimal Step-size", 1991 International Symposium on Circuits and Systems, Singapore, June 10-14, 1991):

$$\mu = \frac{\beta}{\sum_{k=1}^{M} C^2(n-k)}$$

where $\beta < 1$ is a constant step-size.

Other methods, such as the use of an all-zero lattice filter (see e.g. F. Itakura and S. Saito: "On the Optimum Quantization of feature parameters in the PARCOR speech synthesizer", Proc. IEEE Conference on Speech Communication Processing, Newton, MA, 1972, pp. 434 - 437) will lead to a better estimation. However, it is also more time-consuming to achieve it.

Fig. 4 shows an ATM communication system where one network element e.g. a terminal 8.1 is connected to the rest of the network 11 via a wireless ATM link 9 and a network element 12. The ATM link 9 may comprise a plurality of ATM connections. Just one ATM connection 10 (via network element 12) to another terminal 8.2 within the network 11 is depicted. A control channel 13 between the network element 12 and the terminal 8.1 is used to transfer information about the link quality from the receiver on each side of the wireless channel back to the corresponding transmitter. It is assumed that the network elements which are connected via the wireless ATM link perform Connection Admission Control, link monitoring and are capable of exercising usage parameter control and traffic shaping. Network elements can be multiplexers, switches, radio access points in a cellular system etc.

The exemplary embodiment preferably comprises subsystems that are part of a network element (NE) which controls a wireless ATM link. Subsystems may be implemented in dedicated hardware or in software. Any person skilled in the art can implement the proposed ATM system on the basis of the described functions of the subsystems.

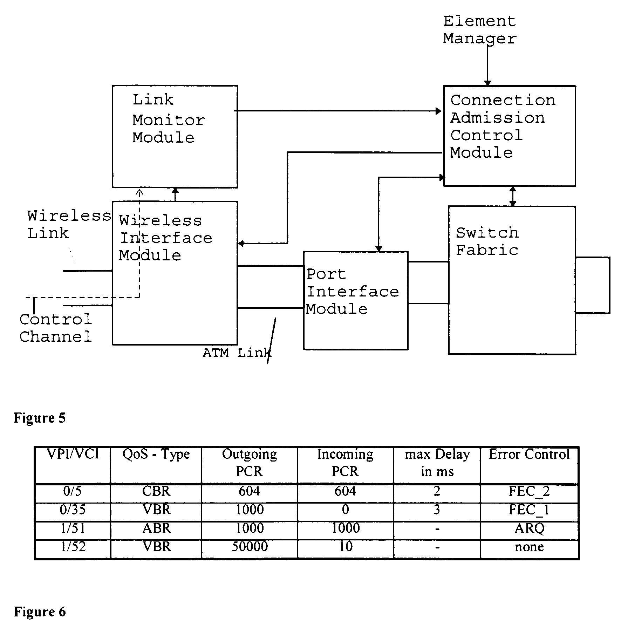

Fig. 5 shows the NE comprising several subsystems. The NE can be specialized in just controlling one or multiple wireless ATM links. It can also be part of a NE performing other tasks like switching of connections among multiple links as well. In the exemplary embodiment, the NE is kept generic with a Switch Fabric subsystem that performs any kind of ATM cell switching and handling of signaling protocols. Other subsystems are

- the Link Monitor Module (LMM),
- the Connection Admission Control Module (CACM),
- the Wireless Interface Module (WIM) and
- the Port Interface Module (PIM).

It should be understood that the partitioning of the exemplary embodiment into these conceptual subsystems is only a functional partitioning and by no means should restrict the manner in which embodiments of the present invention can be implemented. Except when explicitly stated otherwise, a reference to a specific subsystem in this specification refers to a logical subsystem rather than the hardware implementation of that subsystem.

The Wireless Interface Module (WIM) provides the Physical Layer (PHY) and Data Link Layer (DLC) functionality of the air interface. The Physical Layer does the frequency translation, modulation, demodulation, transmission and reception of the bit stream over the air-interface, whereas the Data Link Layer is ensuring a reliable transmission. It provides the access scheme in case of a shared medium access, error detection, error control and scrambling of data. Furthermore, the DLC translates the logical ATM cell stream into a bit stream and vice versa. Various error control schemes can be applied for a connection between communicating end-systems. Due to the anticipated high bit error rate (BER) of wireless links in general, error control is an important issue. Forward Error Correction is applied to those connections with high requirements with regard to delay, jitter and cell loss where retransmission is impractical. Due to the large overhead that is associated with Forward Error Correction Codes, this method is not suited for all connections. Redundancy is added to the transmitted data which allows to recover the original data in case of transmission impairments to a certain degree.

Another method of error control is the repeated transmission of data frames or ATM cells that got corrupted during transmission. Automatic repeat request protocols (ARQ) can be employed for this purpose. In order to apply the optimal Error Control Scheme for each connection, the WIM is aware of the required QoS-parameter of each ATM connection traversing the wireless link. For this purpose, the WIM keeps a table containing the connection parameters and the error correction scheme that has to be used for each individual connection. Connections are identified by their respective VPI/VCI values.

Fig. 6 illustrates such a table. According to this example, the Error Control Mechanism FEC_2 is selected for the connection VPI/VCI = 0/5 with the following QoS parameters: Constant Bit Rate service (CBR) as the QoS-type, outgoing and incoming Peak Cell Rate (PCR) of 604 cells/second and a maximum delay of 2 ms. FEC_2 represents a user-definable error correction scheme. Similarly, for the listed connection 0/35, the error control scheme FEC_1 is selected, and for connection 1/51 an ARQ protocol is chosen. No error control is applied to connection 1/52 in this example. The selection which Error Control Scheme is applied is done automatically depending on the QoS-parameters of the connection. For example, CBR connections are always assigned to FEC_2, and unidirectional Variable Bit Rate (VBR) connections, e.g. the connection 0/35 in Fig. 6, are assigned to FEC_1, whereas an ARQ protocol could be applied to all Available Bit Rate (ABR) connections as it is shown in the example of Fig. 6. Similarly, other combinations can be used for the selection of the proper error control scheme. According to the preferred embodiment it is also possible that the Error Control Scheme is changed depending on the load, the distortions or other factors during the lifetime of a connection. For example, a connection is assigned by default the error control scheme FEC_1, but is changed into ARQ if the Bit Error Rate on the Link exceeds a defined threshold.

The Link Monitor Module (LMM) performs the task of monitoring the wireless ATM link and notifying the CACM of changes of the available link resources, e.g. bandwidth (capacity), delay and cell loss. The information needed to compute the available resources on the wireless ATM link can be obtained in various ways. One possibility is to monitor the physical transmission of the wireless ATM link. The link resources which are currently available can be computed based on the current link utilization and the physical properties of the wireless ATM link, like signal noise ratio (SNR), bit error rate (BER). The total, theoretically achievable, capacity of the channel follows Shannon's law:

$$C = W \log_2 (1 + S/N),$$

where C is the total capacity of the channel in bits per second, W the bandwidth of the channel in hertz and S/N the signal/noise ratio. The available capacity is the difference of the total, theoretically achievable, capacity C, the used capacity U and some delta which characterizes the difference between theoretically achievable capacity and the practical achievable capacity. Another way of obtaining the current wireless ATM link characteristics is in conjunction with the WIM. Based on the knowledge of the characteristics of active connections and the applied error correction scheme, the availability of link resources can be computed and subsequently forwarded to the CACM.

For example, the accumulated net data rate, i.e. without error correction scheme, of all connections traversing the wireless link is known. Due to channel impairments some data frames get corrupted while traversing the wireless link. The corruption of data is detected by the receiver. Cyclic Redundancy Checksums (CRC) that are appended to a data unit is a well known technique to detect transmission errors. As a consequence of detected transmission errors, communication protocols invoke repeated transmissions of protocol data units that were previously corrupted. This of course introduces additional overhead and reduces the total available capacity of the link.

Another possible implementation can utilize the fact that the behavior of the higher layer protocols or/and the application in case of transmission errors, e.g. the repeated transmission of protocol data units, the adaptation of window sizes etc. is known. It is imaginable that these techniques are used in a combined manner.

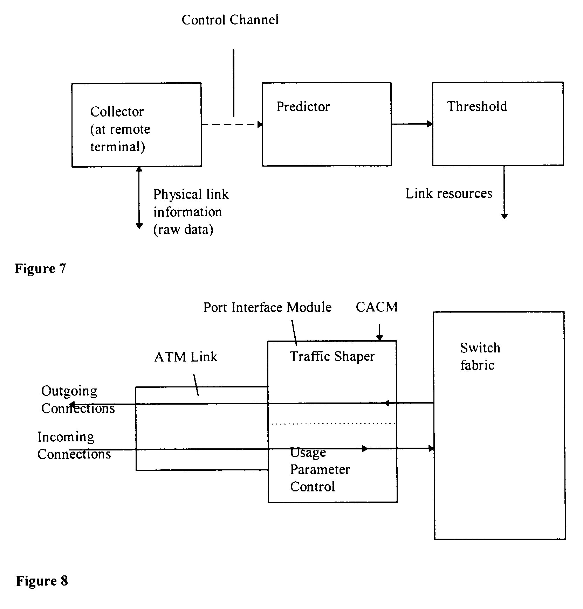

The LMM may be composed of the three logical blocks: collector, predictor and threshold. Their logical interconnection is shown in Fig. 7. The collector gathers the current link information whether by monitoring the physical link or in conjunction with the WIM module as it is described above. It also computes the current link characteristics from the continuously obtained link information. The collector is preferably situated at the receivers end of the supervised channel. The connection between collector and predictor can utilize a separate control channel on which the monitored information is transmitted. See also Fig. 4 and Fig. 5. The predictor calculates, based on the previous history of the link characteristic and its knowledge of the link properties, the estimated link capacity a few time units ahead. The prediction result is passed to the threshold block. Based on the model of the wireless channel and the recent history of the channel conditions, the future conditions, a few time units ahead, are forecast. The predictor is realized in form of conventional logic, i.e. hardware and/or software, using fuzzy logic, or a neural network. The prediction of the wireless ATM link characteristic allows to react on changes, i.e. distortions, ahead of time. Thus, processing delays for the adjustment of the UPC/traffic shaper parameter or the modification of traffic contracts are covered. In order to minimize the amount of control traffic and the required processing power in the CACM module, thresholds in time and value are defined. The CACM module is notified, if the available capacity on the wireless ATM link changes for a certain percentage or passes a given threshold. It is also possible to adapt the threshold dynamically, e.g. according to the link utilization. For example, close to the saturation of the link, small changes of the available link capacity result in an update of the CACM module, whereas in case of low link utilization, the absolute change to cause a notification of the CACM is higher.

The Port Interface Module (PIM) controls the ATM cell flow at the input and output ports of the Switch Fabric. It performs the function of usage parameter control (UPC) for incoming ATM traffic and traffic shaping for outgoing ATM cell streams.

Fig. 8 illustrates the situation of Port Interface Module between Switch Fabric and an ATM link. The UPC enforces the traffic contract for the incoming (into the NE) traffic of each connection. Cells are dropped or tagged if the agreed cell rate is exceeded, or Resource Management cells (RM) are sent back to the source to adjust the transmission rate according to the current network conditions. The use of RM cells to control ABR (Available Bit Rate) for flow control and resource management in conjunction with a wireless ATM link is described in the publication: "Use of ABR flow control in wireless ATM systems" (see introductory part of the present description). UPC parameters constitute of one or multiple QoS parameters, like traffic type, bandwidth and delay. Schemes that implement UPC, like the "leaky bucket", are widely described in the literature. The book "Foundation for Broadband Networks", Uyless Black, Prentice Hall PTR, Englewood Cliffs NJ, 1995, gives an overview of such schemes. According to the preferred embodiment, UPC is applied to all ports/links including those of the fixed network of the NE. Thus, UPC is done for all connections. Subsequently, ATM cells sent out via the wireless ATM link, pass through the UPC before entering the NE. UPC can also be performed within the WIM.

Traffic shaping is applied to outgoing ATM cells, i.e. the ATM cells which are sent at line speed are spaced to guarantee the agreed cell rate, which in turn determines the required capacity. It is usually realized in hardware by using buffers and timers. The initialization of UPC and traffic shaping parameters takes place during connection establishment. The parameters are provided by the CACM. They are derived from the connection setup parameters and from the status of the wireless ATM link according to the preferred embodiment. Likewise, modifications of connection parameters during a lifetime of a connection result in the adjustment of the corresponding UPC and traffic shaping settings.

The Connection Admission Control Module (CACM) is invoked during connection setup and modification of established connections. It performs routing of connection requests, checking and reservation of resources, like bandwidth, as well as the control of the network element itself, e.g. the switch hardware. In order to perform the listed tasks, the CACM maintains a database. This database stores separately the available resources and the currently used resources for each individual connection, each Virtual Path (VP) and each link associated with the network element (NE). The database contains an image of the current state of the NE. Depending on the type of NE, the CACM may perform other tasks, e.g. routing, as well. Since these functions are not essential for the explanation of the invention, they are omitted here.

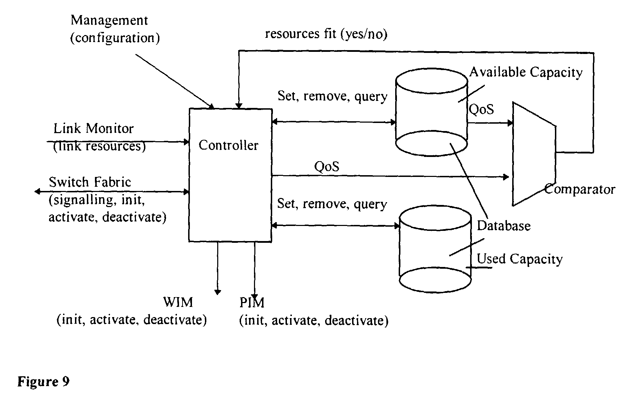

Fig. 9 illustrates the functional entities of the CACM that are related to resource reservation and control. The controller contains the logic for coordination of the database access and controlling the interfaces of the PIM. The database is split into a database containing the available resources of the NE, its links and VPs as well as a database of the actually used resources for each connection. Database operations comprise of setting, removing and querying of resource values associated with the NE, its links, the VPs and single connections. Resource values describe the QoS parameter like bandwidth (capacity), delay etc. The comparator allows to compare two sets of QoS parameters. The outcome is whether the provided set of QoS parameter can be accommodated within the available resources or not.

The inter-working of the entities mentioned above is described briefly in the following: Upon power-on the databases are configured. The initial values are preferably provided by the external NE management. The controller initializes the modules CACM, WIM and Switch Fabric upon power-on or reset with a startup configuration.

Upon connection establishment, which can be initiated from the management or via signaling, the database that maintains the image of the available resources for the NE is queried for the maximum available QoS that can be supported. The decision whether the new connection with its QoS can be accommodated within the available resources is returned by the comparator. If it is not possible to accommodate the new connection within the given resources, the comparator returns: "resources don't fit". Subsequently, the connection request is rejected. In case where connection characteristics negotiation during connection establishment is supported, as it is specified in the ATM User-Network Interface Signaling Specification Version 4.0, the Alternative ATM Traffic Descriptor or a value ranging between and including the Minimum acceptable ATM Traffic Descriptor and the ATM Traffic Descriptor can be matched with the available resources. If a match is possible, the connection is accepted within the NE. Subsequently, the databases containing used and available resources are updated. Once the connection is finally accepted throughout the entire path, the modules Switch Fabric, WIM and PIM are "physically" activated for the connection which was previously reserved in the databases. If the further connection establishment fails, the resource reservation will be canceled. The release of a connection results in a process of the reverse steps, i.e. the modules CACM, WIM and Switch Fabric are requested to "physically" deactivate the connection. Subsequently, the resource reservations associated with the connection are removed from the databases.

For connections traversing the wireless ATM link, it is important to take into account the changing characteristics of the link and the QoS which the link can support, when deciding whether the connection can be accepted or not. Therefore, the CACM controller is notified of changes of the capacity of the wireless ATM link. Subsequently, the database that contains the available resources of the affected link is updated. Based on the most recent status of the wireless ATM link, the decision is made, whether a request for establishing a connection having a certain QoS can be accepted. This is done in one step without explicitly querying other modules. As a result, the connection setup delay is minimized. To guarantee that the wireless ATM link can support the active connections with the given QoS, any reduction of the resources of the wireless ATM link results in a re-checking if the requested QoS for all connections traversing the wireless ATM link are within the limits of the available capacity of the link. If it is not possible, the modification of the traffic contract(s) for one or multiple connections is initiated by the CACM controller. The selection of the connection to be downgraded can be done arbitrarily or follow a priority scheme, e.g. VBR connections are modified first.

The scheme of the priorities can exploit the fact that in many applications the content of a data stream can be separated into more important and less important information. Accordingly, data belonging to one logical connection can be distributed to different connections, i.e. VPIs and/or VCIs, having different priorities. Subsequently, important data is carried over the high priority VPI and/or VCI; whereas, less important data use the low priority VPI and/or VCIs. This technique is especially suited for the transmission of compressed video and audio streams. In the high priority channel, data that is transmitted is essential to guarantee a minimum quality. One or more other low priority channels are used to transmit quality enhancements. For example, MPEG coded video can be split into different priorities. The highest priority is used to transmit I-frames, whereas B-frames and P-frames use lower prioritized channels. The loss of B-frames and P-frames is less critical than the loss of I-frames. The segmentation, distribution and re-assembly of logical connection can also be carried out in the Wireless Interface Module. The data type of the respective connection has to be known in advance. Data are continuously analyzed, segmented and distributed in the transmit direction. The receiver has to merge the data received on different connections accordingly. Buffering to adjust to different delay properties of the separate connections may be necessary.

Ranges of VPI and/or VCI values having different priorities can be assigned, e.g. all VCIs in a certain VP with odd numbers have high priority and those with even numbers have low priority.

The modification procedure itself follows the same pattern as it is defined in the ITU recommendation Q.2963.1 with the extensions that the modification procedure is initiated by an intermediate network element.

Third party modification is currently not foreseen in the above mentioned ITU recommendation. The CACM adjusts connection characteristics of the modules PIM and WIM accordingly. This allows the PIM to change the QoS of ABR-connections according to the supported QoS before the actual traffic contract is modified. The cell loss ratio for UBR connections can be modified as well in order to meet the traffic contract for other connections traversing the wireless ATM link. The adjustment of ABR and UBR of connections properties can be carried out continuously whenever the characteristics of the wireless ATM link are changing. It may also be possible to modify the traffic contracts by increasing the resources of those connections where the QoS was previously downgraded.

Thresholds for values and time are defined to prevent continuous small adjustments around an average value and to reduce the signaling load due to frequent modifications requests. Another option to cope with an overload situation is to initiate a reduction of the load of the wireless ATM link. For example, handover could be initiated in a wireless system. An approach similar to the establishment of a connection is taken for the modification of a connection, i.e. the databases within the CACM are checked and updated first, before the actual connection parameters are modified. Due to the use of the predictor within the LMM there is some timing advance which minimizes the need for buffering ATM cells to be transmitted via the wireless link.

The Switch Fabric comprises those entities of hardware and software that are necessary to perform the required functionality on the Physical and Data Link Layer of the NE. In case of an ATM switch, the Switch Fabric forwards ATM cells received on one link to one or multiple links, respectively. The switch translates the VP/VC identifier of the forwarded cells according to the destination. Apart from physically switching a connection, the Switch Fabric also handles the signaling traffic. Connection control information, like requests to set-up, release and modify a connection, are received from neighboring NEs and subsequently forwarded to the CACM module. The protocol handling is seen here as a part of the functionality of the Switch Fabric. After the connection request has been processed by the CACM a respective control primitive is sent out via the Switch Fabric.

What follows is a discussion of typical scenarios concerning a wireless ATM link from the perspective of the message flow. This facilitates an understanding of the interactions between the subsystems described above. For the purpose of simplifying the description, some assumptions are made.

The flow of Connection establishment sequence via the wireless ATM link is described in the following. It is assumed that the connection establishment is invoked by a terminal that is attached to a non-wireless ATM link but the destination (called party) is connected to the considered NE via the wireless ATM link. A connection establishment request, received by the Switch Fabric, is forwarded to the CACM. The CACM performs the necessary routing function, i.e. determining the outgoing link, the VP, and chooses a VC. The CACM does the resource reservation for the links. It checks if the connection with the desired QoS can be accommodated within the available resources for the NE. Resources are switching capability, the link capacity and the bandwidth (capacity) configured for the VP where the VC is configured. Therefore, the CACM queries its own database containing the image of the NE and its corresponding entities. The comparator output shows, if the connection can be accommodated within the available resources. If it can be accommodated, the connection establishment request is forwarded to the destination (called party). Upon acceptance of the connection request, the connection throughout the network is established. The destination (called party) sends a connect request back to the originator of the connection request. This leads to an activation of the previously reserved connection of all intermediate NEs. The two NEs that manage the wireless ATM link (one for each direction) will activate the Switch Fabric and the wireless ATM link for the connection. Therefore, the CACM sends the appropriate primitives (hardware specific instructions) to the modules Switch Fabric, PIM and WIM which in turn perform the necessary steps to create the connection. The connection parameters are passed to the PIM where they are used for traffic shaping and usage parameter control. The wireless ATM link is managed by both NEs, the link is in between. Each NE does usage parameter control and traffic shaping for its incoming and outgoing ATM cell flows, respectively.

If there are not sufficient resources available, i.e. the database query and the subsequent comparison show that the requested resources exceed the available resources on either of NE, links and the appropriate VP, the connection establishment request is rejected. A message indicating the lack of resources, i.e. link capacity, is sent back to the origin of the request. No forwarding of the connection establishment request is done. In case the connection establishment request is rejected by the destination (called party) or by an intermediate NE on the path, the reservation of resources for the particular connection is undone within the database of the CACM.

Due to the prediction of the wireless ATM link characteristic, the database of the CACM reflects the current and the future status of the wireless ATM link. When the database is queried, the decision whether the connection can be accommodated is made based on the prospective link status, i.e. depending on the capacity forecast generated by the predictor. The similar procedure is followed upon connection modification when resources of the requested modified connection exceed the ones of the original connection.

Connection release is normally initiated from one of the connection endpoints, i.e. called or calling party. The release request, received by the Switch Fabric, is passed to the CACM where the deactivation of the connection is initiated from the modules WIM, PIM and Switch Fabric. Simultaneously, the CACM databases are updated.

For the following scenario it is assumed that one or multiple connections traversing the wireless ATM link are set up. It is further assumed that these connections use approximately 80% of the available link capacity. Sudden distortions cause repeated transmission of data due to the ARQ protocol that is selected for one or multiple connections. This in turn reduces the available link capacity. The reduction of link capacity and its cause is sensed by the LMM which performs the necessary processing and prediction of the wireless resources in the next few time units. In dependency of the defined threshold (time interval and value) a resource update request is formed and sent to the CACM. The CACM, upon reception of the update request, adjusts the database of available resources for the link and checks if the traffic contracts of the existing connections can still be maintained.

Assuming the link utilization is increased to 95% and it is predicted that the utilization will not change for the next time unit, e.g. 2 seconds, and the threshold is set to 5% intervals, a resource update message is sent by the LMM to the CACM, where the database that stores the available resources is subsequently updated.

One or multiple connections are selected for modification if the available link capacity is not sufficient, i.e. the link utilization would exceed 100%. A modification request by the CACM is generated and sent toward the communicating end-systems, i.e. calling and called party. The selection criterion for the connections to be modified is obtained from a priority list. This priority list ranks all active connections depending on their QoS. For example, VBR connections will be modified prior to CBR connections.

In case of ABR, the source of ATM cells is ordered by the PIM to adjust the transmission rate granted to selected ABR connections. This is done on a connection level by emitting RM cells specifying a reduced credit or rate toward the source depending on the employed ABR scheme.

ATM cells belonging to UBR type connections are dropped or tagged for dropping if the wireless resources are insufficient. The determination of the time interval ahead following a change of the conditions for the prediction of the wireless resources should exceed the maximum of the round-trip time for the adjustment of the ABR/UBR parameters and/or the modification of a connection.

An increase of the wireless link capacity follows the similar procedure as it is done for the decrease of the available capacity. If the predicted link capacity exceeds the given threshold, the databases maintained in the CACM are updated. Active connections which were previously modified to consume less resources are subject to modification to their original values. The selection of connections for modification can follow a priority scheme as it is mentioned above.

In case of ABR, the source of ATM cells can be ordered by the PIM to increase the transmission rate granted to selected ABR connections. This is done on a connection level by emitting RM cells with specific settings toward the source. UBR type connections are not modified, but the NE may enforce a different peak cell rate.

As it is readily apparent, the present invention provides several advantages for controlling the QoS of connections traversing a wireless ATM link. Due to the dynamic adaptation of the QoS to the maximum available QoS which the link can support, the wireless link capacity is used efficiently. In addition, the principle allows a fast implementation of connection setup procedures, which is essential for a high performance ATM network. Since the predicted status of the wireless ATM link is stored in the resource databases of the NEs controlling the wireless link, no querying of external entities or devices takes place during the time critical phase of the connection setup operation. The resource reservation requires just the querying of the database which contains the up-to-date image of the hardware and the available resources. (The hardware transmits update signals in an event driven manner to the database whenever a modification of a parameter is necessary. The database does therefore not have to query the hardware, when a connection request has been received.) It is shown how the QoS of already admitted connections can be guaranteed in a wide range of changing conditions on the wireless ATM link. Before the traffic contracts concerning the QoS of existing connections are modified, ABR and UBR connections are preferably affected first.

The approach shown in the invention can be favorably employed for distorted links carrying ATM connections, like microwave links, optical links or cellular wireless systems. For the latter one, a possible application can be seen also in conjunction with handover in a cellular network. Following a handover, the QoS parameter are dynamically adapted to the conditions of the radio cell that the mobile terminal has entered. The described approach is not restricted to ATM systems. It can be used in conjunction with non-ATM systems which support QoS guarantees (e.g. Internet Protocol with RSVP).

The invention addresses the problem of the impact of the wireless link behavior on the QoS of ATM connections and proposes a solution that is suitable for all type of systems.

The major problem concerning the QoS of a wireless ATM link is the change of the parameters of the transmission channel (air-interface, power line communication interface etc.) in time, e.g. transmission errors may result in repeated transmissions of the distorted data which in turn leads to a higher delay and to a reduction of the available link capacity. The congestion control mechanisms according to the invention are continuously adjusted to maximize the link utilization at any given time.

## Claims

1. Process for controlling the traffic on a digital communication link of variable transmission quality established between two network elements characterized in that the transmission capacity of the link is continuously monitored and a prediction of the available transmission capacity is calculated for at least one time unit in advance and the traffic is controlled on the basis of the calculated prediction of the link capacity.

2. Process according to claim 1, characterized in that the prediction is calculated on the basis of transmission capacity of the link during previous time units.

3. Process according to claims 1 or 2, characterized in that the prediction is calculated depending on the type of communication protocol of the connections actually established on the link and on the number of transmission errors detected and automatic repeat requests transmitted.

4. Process according to one of claims 1 to 3, characterized in that the transmission rate of at least one source of the connection using the link is reduced if the available transmission capacity falls short of a predefined threshold.

5. Process according to claim 4, characterized in that the threshold is set depending on the currently available transmission capacity.

6. Process according to one of claims 1 to 5, characterized in that the error correction scheme of a data source is set depending on the current or predicted channel distortion.

7. Architecture for ATM communication on a link with variable transmission quality comprising two network elements for controlling the traffic on the link established between them, characterized by a means for continuously monitoring a transmission capacity of the link and for predicting the available link capacity for at least one time unit in advance.

8. Architecture according to claim 7, characterized in that there is a Connection Admission Control Module comprising a database with the relevant parameter values of the link and in that the means for continuously monitoring the transmission capacity of the link and for predicting the available link capacity is connected to the Connection Admission Control Module for automatically updating the database.

Available
Link
Capacity

Figure 1

Figure 2

$\hat{C}(n)$

C(n-1)

Adaptive
Filter

C(n)

Comparator

-

e(n)

+

**Figure 3**

Control
channel

Wireless
ATM Link 9

13

Terminal
8.1

Network
Element

12

Network

11

Terminal
8.2

ATM connection 10

**Figure 4**

**Figure 5**

| VPI/VCI | QoS - Type | Outgoing PCR | Incoming PCR | max Delay in ms | Error Control |
|---------|------------|--------------|--------------|-----------------|---------------|
| 0/5 | CBR | 604 | 604 | 2 | FEC_2 |
| 0/35 | VBR | 1000 | 0 | 3 | FEC_1 |
| 1/51 | ABR | 1000 | 1000 | - | ARQ |
| 1/52 | VBR | 50000 | 10 | - | none |

**Figure 6**

Control Channel

| Collector (at remote terminal) | | Predictor | | Threshold |

Physical link information (raw data)

Link resources

**Figure 7**

Port Interface Module    CACM

ATM Link    Traffic Shaper    Switch fabric

Outgoing Connections

Incoming Connections

Usage Parameter Control

**Figure 8**

**Figure 9**

| | European Patent Office | EUROPEAN SEARCH REPORT | Application Number EP 98 81 0469 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br><br><br><br>A | WO 94 11955 A (PERICLE COMMUNICAT CO) 26 May 1994<br>* page 52, line 22 - page 53, line 8 *<br>* page 55, line 16 - line 19 *<br>* page 57, line 14 - line 18 *<br>* figures 18,19,23,24; table 8 * | 1,2,4,6,7<br><br><br><br>5 | H04L1/12<br>H04L12/56<br>H04Q11/04 |
| X<br><br><br><br><br><br>A | WO 93 11618 A (COMMW OF AUSTRALIA) 10 June 1993<br>* page 2, line 9 - line 14 *<br>* page 7, line 14 - line 22 *<br>* page 15, line 15 - line 29 *<br>* page 16, line 1 - line 24 *<br>* page 17, line 2 - line 7 *<br>* figures 7,9 * | 1,2,4,6,7<br><br><br><br><br><br>8 | |
| X<br><br><br><br><br>A | EP 0 643 508 A (THOMSON CSF) 15 March 1995<br><br>* page 2, line 9 - line 29 *<br>* page 3, line 2 - line 9 *<br>* page 5, line 53 - page 6, line 17 *<br>* figure 1 * | 1,2,4,6,7<br><br><br><br><br>8 | TECHNICAL FIELDS SEARCHED (Int.Cl.6)<br><br>H04L<br>H04Q |
| X | KIM Y J ET AL: "A NEW MEDIUM ACCESS CONTROL SCHEME FOR WIRELESS ATM NETWORKS" 1997 IEEE 47TH. VEHICULAR TECHNOLOGY CONFERENCE, PHOENIX, MAY 4 - 7, 1997, vol. 1, no. CONF. 47, 4 May 1997, pages 295-299, XP000701807 INSTITUTE OF ELECTRICAL AND ELECTRONICS ENGINEERS<br>* abstract *<br>* sections 2, 3.1 * | 7,8 | |

The present search report has been drawn up for all claims

| Place of search | Date of completion of the search | Examiner |
|---|---|---|
| THE HAGUE | 23 November 1998 | De Riccardis, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 98 81 0469

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-1998

| Patent document cited in search report | | Publication date | Patent family member(s) | | Publication date |
|---|---|---|---|---|---|
| WO 9411955 | A | 26-05-1994 | AU<br>US | 5550694 A<br>5541955 A | 08-06-1994<br>30-07-1996 |
| WO 9311618 | A | 10-06-1993 | NONE | | |
| EP 0643508 | A | 15-03-1995 | FR | 2710213 A | 24-03-1995 |

EPO FORM P0459

For more details about this annex : see Official Journal of the European Patent Office, No. 12/82